# EUROPEAN PATENT SPECIFICATION

(11) **EP 2 423 269 B1**
(45) Date of publication and mention of the grant of the patent: **17.10.2018**
(21) Application number: 09784115.9
(22) Date of filing: 24.04.2009
(51) Int. Cl.: C08G 77/14, C08K 5/5435, B01J 37/02, B01J 35/00, B01J 21/06, C09D 5/16, C09D 4/00, C09D 183/06

(54) **METHOD FOR OBTAINING PHOTOCATALYTIC COATINGS ON METAL SUBSTRATES**
VERFAHREN ZUR HERSTELLUNG VON PHOTOKATALYTISCHEN BESCHICHTUNGEN AUF METALLSUBSTRATEN
PROCÉDÉ POUR OBTENIR DES REVÊTEMENTS PHOTOCATALYTIQUES SUR DES SUBSTRATS MÉTALLIQUES

(43) Date of publication of application: 29.02.2012
(73) Proprietor: FUNDACION TECNALIA RESEARCH & INNOVATION, 20009 San Sebastián (Guipúzcoa) (ES)
(72) Inventor: DE MIGUEL, Yolanda Rufina, 48160 Derio (Vizcaya) (ES); VILLALUENGA ARRANZ, Irune, 48160 Derio (Vizcaya) (ES); PORRO GUTIÉRREZ, Antonio, 48160 Derio (Vizcaya) (ES)
(74) Representative: Carpintero Lopez, Francisco
(86) International application number: PCT/ES2009/070113
(87) International publication number: WO 2010/122182

(56) References cited:
- JP-A- 2004 238 550
- US-A1- 2007 166 467
- T. TEXTOR, F. SCHRÖTER, E. SCHOLLMEYER: "Thin Coatings with photo-catalytic activity based on inorganic-organic hybrid polymers modified with anatase nanoparticles" MACROMOL. SYMP. 2007, vol. 254, no. 1, 10 August 2007 (2007-08-10), pages 196-202, XP002560344 Weinheim DOI: 10.1002/masy.200750830 cited in the application

## Description

### FIELD OF THE INVENTION

The invention relates to the field of coatings on substrates which one wants to protect and keep clean. In particular, the invention relates to a method to produce a transparent photocatalytic coating on a stainless steel substrate by the inclusion of crystalline titanium dioxide nanoparticles in anatase phase in a polymeric silica matrix. The stainless steel thus coated finds application in the field of construction or the environment, among others, since it is capable of destroying different contaminants on surfaces, on façades, in water or in air, for example.

### BACKGROUND OF THE INVENTION

As is well known in the state of the art, the existence of contaminated or dirty surfaces is a generalized problem, both due to chemical products and by atmospheric air due to the contaminants it is capable of transporting. This is due to the fact that the cleaning of building façades, floors, walls, etc., entails a high cost in terms of material to be used and human intervention.

The possibility of protecting the surface or the environment in which it is found is of great interest in the field of construction and the environment. In these cases the advantages provided by the coatings based on nanoparticles lie in being able to form coatings with them which can protect and maintain the surfaces on which they are found clean.

Today, most nanoparticles which are used for these purposes in construction and the environment are titanium dioxide nanoparticles (TiO₂). After Fujishima and Honda (Fujishima, A.; Honda, K., Nature 1972, 37, 238) discovered, in the 1970s, the photocatalytic dissociation of water on TiO₂ electrodes (Hashimoto K., Irie, H; Fujishima, A., Jpn. J. Appl. Phys. 2005, 44 (12) 8269) the development commenced of a large number of investigations based on this photocatalytic semiconductor. Titanium dioxide is a photosensitive semiconductor, and valence electrons are excited in the conduction band by a radiation energy in the ultraviolet range (200-400 nm) (Balasubramanian G.; Dionysiou D.D.; Suidan M.T., "Titanium Dioxide Coatings on Stainless Steel" Encyclopedia of Nanoscience and Nanotechonology, Marcel Dekker; Schubert U., Husing N., "Synthesis of Inorganic Materials" Wiley-VCH, Weinheim, (2005)). The crystallinity of this semiconductor is fundamental for good photocatalytic activity. The three crystalline forms of greatest importance are: anatase, brookite and rutile. The rutile phase is stable at ambient temperature unlike the brookite and anatase phases which are metastable; however, the structure with greater photocatalytic activity is anatase. Both the rutile and the anatase structure are formed by TiO₆ octahedron chains, the difference between them being the distortion of each octahedron and the bonding template of the chains (Banfield, J.F. & Navrotsky A. "Nanoparticles and The Environment" Mineralogical Society of America, Virginia, (2001)). Therefore, the mass densities and the electronic band structures are different due to the differences in the network structures.

Titanium dioxide nanoparticles have been used in different applications depending on the configuration (powder, coatings, etc.) in which they are found. The coatings of titanium dioxide nanoparticles with photocatalytic properties are of great interest for the development of new products. Many investigations are focussed towards the development of titanium dioxide coatings on different substrates (glass, ceramic, plastics, etc.). The most used substrate in the bibliography is glass. Other materials used to produce coatings are metals such as aluminium or stainless steel (Jiaguo, Y. Rare metals 2004, 23 (4), 289). The use of this material, in particular, has certain challenges such as to obtain a good adhesion together with the preservation of the structural integrity of the metal.

A very widely used method to produce photocatalytic coatings is the synthesis of the TiO₂ coating *in situ.* Thus, Chen et al. (Chen, Y.; Dionysiou, D.D. Appl. Catal. B-Environ. 2006, 69, 24) produced coatings of titanium dioxide nanoparticles on stainless steel. To produce these coatings they used the Sol-Gel synthesis described by Takahashi et al. (Takahashi, Y.; Matsuoka, Y. J. Mater. Sci. 1988, 23, 2259) with certain modifications, using diethanolamine (DEA) to control the stage of hydrolysis of the titanium precursor (titanium isopropoxide) under the addition of water. The coatings were initially amorphous and a calcination stage at 500 ºC for 1 h was required to give rise to the anatase phase (crystalline structure more photoactive than TiO₂). The photocatalytic activity seems fairly poor. Therefore, in a subsequent article (Chen, Y.; Dionysiou, D.D. Appl. Catal A-Gen. 2007, 317, 129) modified the reaction conditions adding TiO₂ P25 (Degussa) in powder and polyethylene glycol (PEG) as pore forming agent to increase photocatalytic activity. In this case, although the photocatalytic activity of the coating increased, the sol they generated were not stable and, furthermore, the coatings were produced with thermal treatments at high temperatures, with the subsequent possibility of altering the intrinsic properties of the steel.

Another example of photocatalytic coatings on stainless steel is that developed by Fernández et al. (Fernandez, A.; Lassaletta, G.; Jiménez, V.M; Justo, A.; Gonzalez-Elipe, A.R.; Herrmann, J.M.; Tahiri, H.; Ait-Ichou, Y. Appl. Catal. B-Environ. 1995, 7, 49). To do this, they prepared a suspension of TiO₂ P25 (Degussa) in acetone and coated the steel by electrophoretic deposition and, finally, to increase the adhesion of the coatings, they were subjected to a thermal treatment in N₂ atmosphere at 500 ºC for 4-8 h. As a consequence of this thermal treatment diffusion phenomenon of the Fe³⁺ and Cr³⁺ ions occurred. These heterocations generated a recombination of the electron-hole centres, giving rise to a decrease in the photocatalytic activity of the coating.

Likewise, document US 7144840 B2 discloses a method of synthesis and different methods of deposition of one or several layers of TiO₂ nanoparticles on aluminium, stainless steel, etc. In this method thermal treatments at 450 ºC were used on the coated substrate in order to achieve good adherence, therefore, in this case, neither did it manage to avoid the diffusion of ions in the metal.

Likewise, document FR 2838735 B1 discloses coatings with photocatalytic properties on glass, ceramic, metals, etc., produced by the layer by layer method. The coatings were formed by two different layers: the first composed of a hydrophilic layer of silicon oxide derivatives and the second by titanium oxides which provided the photocatalytic activity to the coating. In this case, in addition to using thermal treatments at 600-700 ºC (with the consequent diffusion of ions and the decrease in photocatalytic activity), for the deposition on the substrate one of the methods used was chemical vapour deposition (CVD), for which reason the final cost of the product was more expensive due to the high cost of the equipment.

Therefore, bearing in mind the prior art, the thermal treatments used either to generate the anatase phase of the TiO₂ (which provides the photocatalytic activity) or to improve the adhesion of the coating on the metal, are not suitable for the structural integrity of the metal to produce a good photocatalytic activity.

There are other methods in the state of the art which do not need thermal treatments at high temperatures such as, for example, that disclosed in document WO 2005/059196 A3. This method was aimed at producing an ultrafine coating (10-100 nm) of a protector oxide on a metal from an aqueous solution of oxide nanoparticles (SiO₂, SnO₂, TiO₂, ZrO₂, Al₂O₃, CeO₂, Sb₂O₅, etc.) to which a chemical additive was added to control the thickness of the layer formed. Said solution was later deposited on the previously heated substrate at a temperature over 120 ºC, the deposition time being lower than 5 seconds. This method, nevertheless, limits the use of organic solvents (isopropanol, ethanol, etc.) in the initial solution due to the use on a previously heated substrate.

Another method of producing protective coatings on metals at low temperatures is that disclosed in document GB 2425975 B by a sol-gel synthesis, although TiO₂ nanoparticles are not used and, therefore, said coatings lack photocatalytic activity. These coatings were formed by two different layers: the first composed of a curing agent (triethylenetriamine, diethylenetriamine, tetraethylenepentamine, etc.) and the second by ormosil (tetramethoxysilane, tetraethoxysilane, 3-glycidoxy-propylmethoxysilane, etc.). The resulting final coating was cured at ambient temperature or 150 ºC in the case that the first layer incorporated silica gel particles to increase the hardness of the coating. This method is based on the layer by layer method, for which reason the adhesion is due to the electrostatic interaction between the layers and not to the formation of a hybrid polymeric matrix between the curing agent and the ormosil.

Therefore, nowadays it continues to be a challenge to develop a viable methodology to produce titanium dioxide coatings on metals that are transparent and which have photocatalytic activity without altering the intrinsic properties of the metal.

Recently, Park et al. (Park et al., Material Science Forum Vols. 544-545 (2007) pp. 127-130) proposed TiO₂/SiO₂ hybrid coatings on stainless steel with photocatalytic properties for water purification. These coatings were prepared from a titanium dioxide sol in an unspecified solvent and a binder composed of a silica sol, methyltrimethoxysilane, an acid catalyst and an isopropyl alcohol, a mixture which is applied to the substrate and is cured at 200 ºC for 1 day.

Likewise, document WO 2007/131474 discloses self-cleaning coating materials which contain hydrophilic surface components such as silanol and titanium dioxide or silica nanoparticles, and which are applied to the substrate before curing it at a temperature between ambient temperature and 500 ºC. Said coatings were prepared from a solution of tetraethoxysilane optionally mixed with a polyether silane, to which hydrochloric acid is added and then silica nanoparticles in the form of colloidal solution, and which is then applied on glass, ceramic, cement or plastics, for example. Said coating, however, had the drawback of not having flexibility .

Likewise, document WO 2004/037944 discloses a method to produce self-cleaning surfaces on substrates, preferably of glass or plastic from an aqueous composition with a pH of 7-11 which comprises nanoparticles of a metal oxide (SiO₂, Al₂O₃, ZrO₂, TiO₂, CeO₂, ZnO₂ and mixtures) and surface modifier (a polydimethylsiloxane, an alkoxy silane, mixtures of both, fluorourethanes, acrylic polymers or fluorinated methacrylics, etc.). Said mixture is applied on the surface to coat and, after the evaporation of the solvent, a self-cleaning transparent coating is formed on it. Said coating, however, has the drawback of suffering a degradation by light hitting it.

Surprisingly, these inventors have discovered that starting from an epoxysilane compound as sole organosilane derivative together with a particular percentage of crystalline titanium dioxide nanoparticles essentially in anatase phase added in powder form or of acidified dispersion in water, and a polyetheramine-type catalyst alternative photocatalytic coatings on steel can be used in gentler synthesis conditions.

Epoxysilane compounds have already been used in preparing photocatalytic coatings on plastic together with crystalline titanium dioxide nanoparticles, as disclosed in document JP 2008007610, although these coatings comprise two layers: a first film of polysiloxane produced from an organosilane compound of the state of the art coated, in turn, with a second photocatalytic layer of a metal oxide such as TiO₂, ZnO, SnO₂, SrTiO₃, WO₃, Bi₂O₃ or Fe₂O₃, for example.

Likewise, document US 6291070 discloses nanostructured layers produced by wet route preparing a sol from a suspension in an inferior alcohol of solid titanium dioxide nanoparticles (among others metals or derivatives of metals such as oxides, chalcogenides, halides, arsenides, nitrides, phosphates, silicates, aluminates, etc.) whereto an epoxysilane is added (among other many derivatives of silane such as methacryloxysilane, epoxy silanes, vinyl silanes, alkoxy silanes, alkylamino silanes, etc., or mixtures thereof), which is prehydrolyzed. To the sol thus produced, an imidazole-type catalyst is added and it is applied on a glass or plastic substrate. Said coating, however, has the drawback of having a limited photocatalytic activity due to the low TiO₂ content which is necessary to maintain adherence to the suitable substrate.

On the other hand, Textor et al. (Textor et al., Micromol. Symp. 2007, 254, 196-202) disclose photocatalytic coating to develop self-cleaning textiles which is produced by a sol-gel method from (3-glycidyloxy-propyl)trimethoxysilane and a sol of titanium dioxide or titanium dioxide nanoparticles in anatase phase in a very low proportion, using 1-methylimidazole as catalyst. Said coating, however, has bad adherence properties on metal-type substrates. Document US 2007/166467 A1 discloses a method of improving paint adhesion to a metal surface comprising applying a surface primer comprising the reaction product of a polyamine, such as a polyether amine and a silane reactive with the amine groups. Document JP 2004 238550 discloses a photocatalytic coating composition for stainless steel comprising an organoalkoxysilane, anatase titanium dioxide, a color pigment, an extender and an inorganic binder.

Thus, the method of the invention by a sol-gel method using an epoxysilane, a particular percentage of crystalline titanium dioxide nanoparticles in anatase phase and a polyetheramine-type catalyst, makes it possible to produce photocatalytic coatings on metal surfaces in gentler synthesis conditions as regards temperature and solvents. This is especially advantageous since working at ambient temperature avoids the diffusion of ions in the metal substrate to coat, as well as the oxidation thereof. Furthermore, the costs are less, and the coating mixture is applied by immersion, in addition to reducing the equipment costs, making it possible to coat large surfaces.

The coatings thus produced have good photocatalytic properties, good adherence, flexibility and transparency, at the same time maintaining the intrinsic properties of the metal coated therewith.

### OBJECT OF THE INVENTION

The present invention, therefore, has the object of providing a method to produce a transparent photocatalytic coating on a stainless steel substrate according to claim 1.

Another object of the present invention is to provide the coated substrate with the photocatalytic coating which can be produced by said method.

### DESCRIPTION OF THE FIGURES

- Figure 1: shows the X-ray diffractogram (XRD) of the hybrid material which composes the coating produced by the method of the invention but without TiO₂ nanoparticles (reference hybrid material).
- Figure 2: shows the X-ray diffractogram (XRD) of the hybrid material which composes the coating produced by the method of the invention (hybrid material of the invention).
- Figures 3a and 3b: show the images obtained by environmental scanning electron microscope (E-SEM) of the coating produced by the method of the invention from TiO₂ nanoparticles in powder at a resolution of 500 µm and 20 µm, respectively.
- Figure 4a: shows an image of the coating produced by the method of the invention from TiO₂ nanoparticles in powder. Figures 4b and 4c show the images obtained by Energy dispersive X-ray microanalysis_(EDAX) of the silicon and of the titanium, respectively, in the zone reflected in figure 4a.
- Figures 5a and 5b: show the images obtained by environmental scanning electron microscope (E-SEM) of the coating produced by the method from TiO₂ nanoparticles dispersed at a resolution of 500 µm and 20 µm, respectively.
- Figure 6a: show an image of the coating produced by the method from dispersed TiO₂ nanoparticles.
- Figures 6b and 6c: show the images obtained by Energy dispersive X-ray microanalysis (EDAX) of the silicon and of the titanium, respectively, in the zone reflected in figure 6a.
- Figure 7: shows the photocatalytic behaviour of the coatings produced by the method of the invention: using TiO₂ nanoparticles in powder and by the method using dispersed TiO₂ nanoparticles.

### DETAILED DESCRIPTION OF THE INVENTION

The present invention provides a method to produce a transparent photocatalytic coating on a stainless steel substrate, hereinafter "method of the invention", which consists in the stages of:
(a) preparing the solution of a hydrolyzed epoxysilane compound, said solution consisting in one epoxysilane, water and isopropanol;
(b) adding to the solution produced in (a) crystalline titanium dioxide nanoparticles, in the form of powder, with a proportion of anatase phase over 75%, in a proportion of 1-15% by weight with respect to the total weight of the solution;
(c) adding to the solution produced in (b) a catalyst consisting of a polyetheramine;
(d) coating the substrate with the solution produced in (c); and
(e) subjecting the coated substrate to a thermal treatment.

Thus, in the first stage of the method of the invention, to the epoxysilane compound, which has been previously dissolved in isopropanol, water has been added to hydrolyze it. In this way, a series of hydrolysis and condensation reactions are generated which give rise to the formation of a chain of silicates.

In the context of the invention the term "epoxysilane compound" refers to a silane with epoxy functionality. More in particular, it relates to compounds of formula: 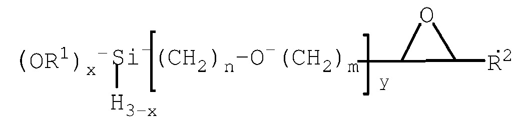 wherein:
R¹ = alkyl C₁-C₄
x = 1-3
n = 1-4
m = 1-4
y = 0-1
R² = H, alkyl C₁-C₆ or cycloalkyl C₃-C₆

In a preferred embodiment of the method of the invention, the epoxysilane compound is one selected from (3-glycidyloxypropyl)trimethoxysilane, glycidoxypropyltriethoxysilane; glycidoxypropylmethyldimethoxysilane; glycidoxypropylmethyldiethoxysilane; and epoxycyclohexylethyltrimethoxysilane. In an even more preferred embodiment, the epoxysilane compound is (3-glycidyloxypropyl)trimethoxysilane.

In the context of the invention the term "crystalline titanium dioxide nanoparticles, the crystalline phase being predominantly the anatase phase" refers to titanium dioxide nanoparticles with crystalline structure with a proportion of anatase phase over 75%.

According to the method of the invention, the titanium dioxide nanoparticles are added in stage (b) in powder form. In general, titanium dioxide nanoparticles are added in stage (b) in the form of dispersion in acidified water at a pH of 2. Said pH makes it possible to achieve a stable dispersion of the titanium dioxide nanoparticles in water and it is achieved by adding to said dispersion an appropriate acid from the state of the art, such as hydrochloric acid, nitric acid, for example, in the suitable proportion. Generally, 1M HCl or 1M HNO₃ is used.

They can be commercial or synthetic titanium dioxide nanoparticles which have hydroxyl groups in the surface area. Thus, for example, they can be prepared by any of the methods described in the bibliography or TiO₂ P25 nanoparticles, marketed by Degussa, for example, can be used.

The nanoparticles to be used in the method of the invention can be titanium dioxide nanoparticles modified by doping.

Indeed, the photocatalytic activity of the titanium dioxide is achieved in the range of ultraviolet light, which represents a small fraction of the solar energy. For said reason, one of the challenges is to improve its efficacy, achieving its activation using visible light. One way of achieving this objective is by doping the TiO₂ with other compounds which make it possible to modify its band structure and, therefore, have photocatalytic activity in the visible zone of the electromagnetic spectrum. Thus, the synthesis of the modified titanium dioxide nanoparticles is performed by doping the nanoparticles with a suitable compound or element from the state of the art so that they have photocatalytic properties in the range of visible light.

Therefore, in a particular embodiment of the method of the invention, the titanium dioxide nanoparticles are titanium dioxide nanoparticles modified by doping with at least one of the following elements: nitrogen, carbon and sulphur.

Said doping of the initial titanium dioxide nanoparticles with nitrogen, carbon, sulphur or mixtures thereof, is carried out using the sol-gel methodology from compounds derived from these elements such as tetramethylammonium hydroxide, ammonium chloride, ammoniac, nitric acid, ammonium carbonate, dodecylamine, thiourea, ethylenediamine, carbon tetrachloride, etc. Thus, for example, the compound derived from nitrogen is dissolved in a suitable solvent (normally an alcohol such as ethanol, isopropanol, etc.) and then the organometallic precursor is added (titanium isopropoxide, tetra-n-butyl titanate, etc.) under vigorous stirring. Distilled water is added to the resulting solution and, finally, it is left to react for the necessary time (hours or days) until generating a gel which is then thermally treated at a temperature around 500 ºC.

In another particular embodiment of the method of the invention, in stage (b) 10% by weight of titanium dioxide nanoparticles with respect to the total weight of the solution are added, i.e. of the solution of hydrolyzed epoxysilane compound and titanium dioxide nanoparticles.

In stage (c) of the method of the invention, a catalyst consisting of a polyetheramine is added to the solution produced previously in stage (b) a catalyst consisting of a polyetheramine. In the context of the invention the term "polyetheramine" refers to a compound with primary amine groups bound to the ends of a polyether chain based on propylene oxide, ethylene oxide or mixtures thereof.

Thus, in a particular embodiment of the method of the invention, the polyetheramine used as catalyst in stage (c) is selected from poly(propylene glycol) bis(2-aminopropyl ether); poly(propylene glycol)-b-poly(ethylene glycol)-b-poly(propylene glycol) bis(2-aminopropyl ether); and *O,O*'-Bis(2-aminopropyl) polypropylene glycol-b-polyethylene glycol-b-poly-propylene glycol. In a preferred embodiment, the polyetheramine used as catalyst in stage (c) is poly(propylene glycol) bis(2-aminopropyl ether). Said polyetheramine can be prepared by any suitable chemical method, or the JEFFAMINE D-230 polyetheramine marketed by Huntsman for example, or another similar commercial one can be used.

In stage (d) of the method of the invention the substrate of interest to be protected is coated with the solution produced in stage (c). To do this, any application technique known in the state of the art can be used such as coil-coating, roll-coating, etc., or immersion can be used if preferred.

Finally, in stage (e) of the method of the invention, the coated substrate is subjected to a thermal treatment to cure the coating thereon. This treatment is usually necessary to generate a film in a suitable period of time as that of an industrial process. The curing temperature is an important factor to be borne in mind since ion diffusion may occur in the case of a metal substrate, altering the intrinsic properties of this or even generating oxidation of the metal. In the method of the invention this factor has been resolved since low curing temperatures are used, obtaining good adherence and thus maintaining the intrinsic properties of the metal.

Thus, in a particular embodiment of the method of the invention, in stage (e) the coated substrate is subjected to a thermal treatment at a temperature of 100-120 ºC for a time of 5-70 minutes. In a preferred embodiment, in stage (e) the coated substrate is subjected to a thermal treatment at a temperature of 105 ºC for a time of 60 minutes.

The thermal treatment may be carried out by any technique known in the state of the art such as stove heating, or an electric oven can be used if preferred.

In this way a hybrid coating is produced with titanium dioxide nanoparticles with photocatalytic properties and which can be applied in different sectors which include, among others, construction (destruction of contaminants in façades, surfaces, etc.) and the environment (purification of air, water, etc.). Thus, it can be used to destroy organic contaminants or other contaminants such as nitrogen oxides, for example, and to destroy microorganisms (bacteria, algae, etc.).

These coatings are particularly interesting when they are used for coating metal substrates, since they have good properties of adherence, flexibility and transparency, maintaining the intrinsic properties of the metal as they avoid the diffusion of ions therein and/or its oxidation.

According to the method of the invention, the substrate is stainless steel.

The applicability conditions that make it possible to think of its industrial and commercial interest in the construction industry are, in particular, the following:
- Use of a combination of polymers, organic molecules and organosilanes which favour adherence to the metal.
- Use of commercial or synthetic titanium dioxide nanoparticles, in this case produced by gentle synthesis conditions (ambient temperature, water as solvent, etc.) .
- Working conditions of the coatings at ambient temperature to avoid the possible oxidation of the metal support to be coated.
- Use of an immersion system to apply the coatings avoiding high equipment costs such as CVD, PVD, spray pyrolysis, etc.
- Possibility of coating surfaces with a large size unlike equipment such as CVD, PVD, spray pyrolysis, etc.

In all cases, the method of the invention makes it possible to increase productivity, lower production costs and improve the quality of the end product.

In another aspect, therefore, the invention provides a coated substrate with the coating produced by the previously described method. In a particular embodiment, said substrate is a stainless steel substrate.

The following examples illustrate the invention and should not be considered limitative of the scope thereof.

### EXAMPLE 1

### Preparation of a photocatalytic coating on stainless steel from (3-glycidyloxypropyl)trimethoxysilane and titanium dioxide nanoparticles added in powder form.

### Description of the starting compounds

The chemical components used for preparing this photocatalytic coating by the method of the invention are: (3-glycidyloxypropyl)trimethoxysilane (GLYMO), isopropanol (ⁱPrOH), distilled water, poly(propylene glycol) bis(2-aminopropyl ether) 130 (JEFFAMINE D-230) and commercial TiO₂ nanoparticles (TiO₂ P25, Degussa).

Table 1 shows the characteristics of particle size and crystallinity (anatase and rutile content) of the TiO₂ nanoparticles used.

**Table 1. TiO₂ nanoparticle characteristics**

| **TiO₂ nanoparticles** | **Particle size (nm)** | **Crystallinity (% anatase / % rutile)** | **Appearance** |
|---|---|---|---|
| Commercial (TiO₂ P25, Degussa) | 15-50 | 82/18 | White powder |

### Method of producing the coating

10 ml of GLYMO were dissolved in 180 ml of isopropanol and 2.4 ml of distilled water were added at ambient temperature and under stirring. Next, the TiO₂ nanoparticles, in commercial powder (TiO₂ P25, Degussa) were added to produce 10% by weight with respect to the total weight. Then, 2.7 ml of JEFFAMINE D-230 were added and it was left to react for 30 min. After that time, an application was carried out by immersion on a stainless steel plate, at an immersion/emersion rate of 20 cm/min. Finally, the assembly was left to cure [coating + substrate] at 105 ºC for 1h.

On the other hand, it was decided to carry out a study of the hybrid material which composes the coating produced by the method of the invention: (1) without TiO₂ nanoparticles (reference hybrid material); and (2) with TiO₂ nanoparticles (hybrid material of the invention). The objective of this study is to obtain information on the molecular structure and the chemical composition (types of bond, crystallinity, etc.) of the hybrid material the coating produced is composed of. To do this, after adding the titanium dioxide nanoparticles to the hydrolyzed GLYMO solution, if applicable, and the catalyst, the reaction solvent was eliminated and the hybrid powder produced was left to cure at 105 ºC for 1h.

### Characterization of the hybrid material

The crystalline structure of the hybrid material produced is characterized by X-ray diffraction (XRD).

### X-ray diffraction (XRD)

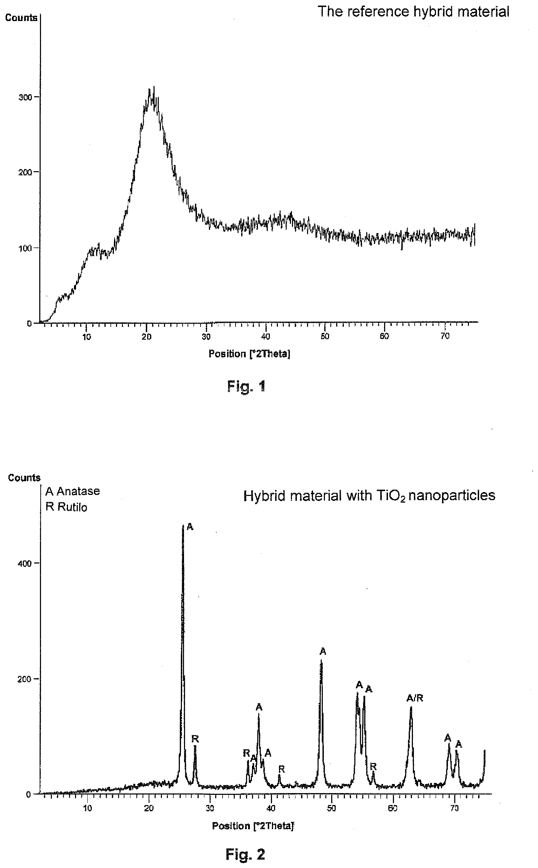

Through the characterization by XRD the non-existence of crystalline phases was verified. Therefore, the reference hybrid material does not have crystallinity. The peak appreciated at ∼ 20º, corresponds to silicon oxides (amorphous) which constitute the reference hybrid material. Figure 1 shows the X-ray diffractogram (XRD) of the reference hybrid material (without TiO₂ nanoparticles).

Figure **2** shows the diffractogram of the hybrid material of the invention (with TiO₂ nanoparticles). In it is possible to observe how the predominant phase corresponds to anatase (82%), although it also contains in a lower quantity the rutile phase (18%). Therefore, a small shoulder is observed in the position of ∼ 20º, corresponding to the amorphous silicon oxides which form part of this hybrid material.

Therefore, it can be concluding by affirming the presence of the anatase phase in the hybrid material of the invention.

### Characterization of the coating

The uniformity and homogeneity of the coating of the invention were characterized by environmental scanning electron microscope (E-SEM) and by energy dispersive X-ray microanalysis (EDAX):

### Environmental scanning electron microscope (E-SEM)

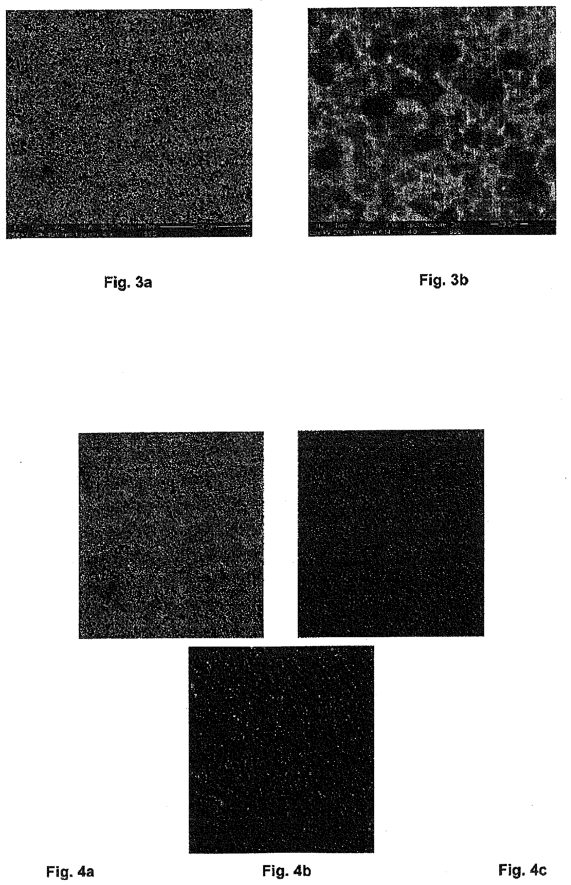

The coating of the invention prepared from TiO₂ nanoparticles in powder had small agglomerations on a uniform base of TiO₂ throughout its surface, as can be observed in figures **3a and 3b** which show the E-SEM images of said coating at a resolution of 500 µm and 20 µm, respectively. Said agglomerates, in any case, do not suppose a disadvantage as demonstrated by the photocatalytic behaviour shown in the Rhodamine B decolorization test detailed below.

### Energy dispersive X-ray microanalysis (EDAX)

EDAX was used to study the chemical distribution of the silicon (Si) and titanium (Ti) in the coating of the invention prepared from TiO₂ nanoparticles in powder. Figures **4b and 4c** show the distributions of the Si and Ti, respectively. As can be observed therein, the distribution of silicon throughout the coating is highly uniform; however, for titanium, the homogeneity is not so uniform, since small agglomerates of titanium dioxide can be observed throughout the coating. Said agglomerates do not, in any case, suppose a disadvantage as demonstrated by the photocatalytic behaviour shown in the Rhodamine B decolorization test detailed below.

### EXAMPLE 2 (reference)

### Preparation of a photocatalytic coating on stainless steel from (3-glycidyloxypropyl)trimethoxysilane and titanium dioxide nanoparticles added in the form of aqueous dispersion acidified to pH 2.

### Description of the starting compounds

The chemical components used for preparing this photocatalytic coating by the method of the invention are: (3-glycidyloxypropyl)-trimethoxysilane (GLYMO), isopropanol (ⁱPrOH), distilled water, poly(propylene glycol) bis(2-aminopropyl ether) 130 (JEFFAMINE D-230) and commercial TiO₂ nanoparticles (TiO₂ P25, Degussa). The characteristics of the TiO₂ nanoparticles have been described in Table 1.

### Method of producing the coating

10 ml of GLYMO were dissolved in 180 ml of isopropanol and 2.4 ml of distilled water were added at ambient temperature and under stirring. Next, the dispersed TiO₂ nanoparticles were added to produce 10% by weight with respect to the total weight. This aqueous dispersion was prepared from commercial TiO₂ nanoparticles (TiO₂ P25, Degussa) in powder form by their addition to distilled water acidified with 1M HCl until pH ∼ 2, followed by a treatment with ultrasounds for 30 min. Then, 2.7 ml of JEFFAMINE D-230 were added and it was left to react for 30 min. After that time, an application was carried out by immersion on a stainless steel plate, at an immersion/emersion rate of 20 cm/min. Finally, the assembly was left to cure [coating + substrate] at 105 ºC for 1h.

### Characterization of the coating

The uniformity and homogeneity of the coating of the invention were characterized by environmental scanning electron microscope (E-SEM) and by energy dispersive X-ray microanalysis (EDAX):

### Environmental scanning electron microscope (E-SEM)

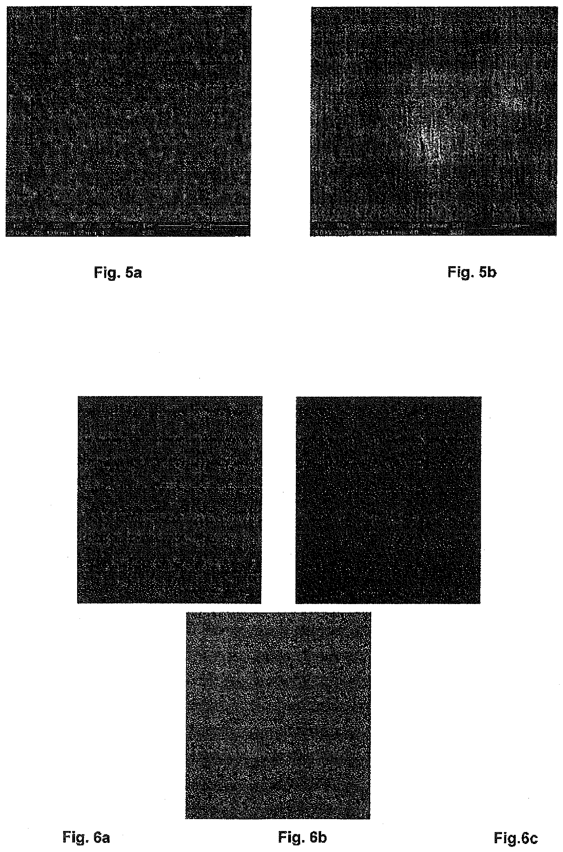

The coating of the invention prepared from dispersed TiO₂ nanoparticles had very good uniformity throughout its surface, as can be observed in figures **5a and 5b** which show the E-SEM images of said coating at a resolution of 500 µm and 20 µm, respectively.

### Energy dispersive X-ray microanalysis (EDAX)

EDAX was used to study the chemical distribution of the silicon (Si) and titanium (Ti) in the coating of the invention prepared from dispersed TiO₂ nanoparticles. Figures **6b and 6c** show the distributions of the Si and Ti, respectively. As can be observed therein, both the distribution of the silicon and titanium throughout the coating is very good, generating coatings with excellent homogeneity and uniformity.

### EXAMPLE 3

### Photocatalytic behaviour of the coatings of the invention prepared in examples 1 and 2

Once the synthesis of the coatings of the invention was carried out on stainless steel, the photocatalytic behaviour of each one of them was evaluated. To do this, the *Rhodamine B test* was carried out, taking as reference the method described by Cassar et al. (Cassar, L. MRS BULLETIN 2004, 29 (5), 328). This method is based on the decolorization of *Rhodamine B* on being irradiated with UVA-340 light (region of 315 to 400 nm). Thus, during the exposure to UV radiation, the pink colour of *Rhodamine B* gradually decreases in intensity becoming inappreciable after 30 min.

### Rhodamine B decolorization test

A solution of *Rhodamine B* in dichloromethane was prepared (CH₂Cl₂), for which 0.1 g of the colorant and 100 ml of CH₂Cl₂ were used. Next, application by immersion were performed of the solution with an immersion/emersion rate of 20 cm/min on the synthesized coatings. Next, the steel plates coated with *Rhodamine B* were introduced in the QUV (accelerated weathering chamber), which provides the ultraviolet light necessary to perform the test. Every 10 min from its exposure to the UV light until total degradation of the *Rhodamine B* (disappearance of the pink colour), measurements were taken of the chromatic coordinate a* in the colorimeter. The data produced from the colorimeter give information on decolorization of the *Rhodamine B* with the UV light at different times.

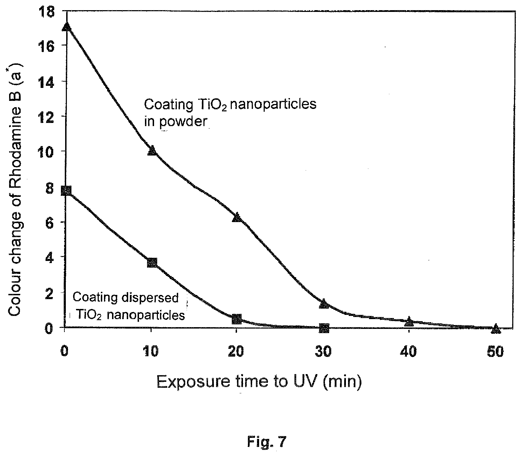

Different tests were carried out using the coatings of the invention produced without using TiO₂ nanoparticles and using TiO₂ nanoparticles in powder form and in dispersed form. Thus, the chromatic coordinate a* of the *Rhodamine B* compared to the UV light exposure time was measured for each of them. The result produced after 50 min are shown in figure 7 for the coatings of the invention.

As can be observed in figure 7, the total decolorization of the coating prepared from TiO₂ nanoparticles in powder was after 50 min of UV radiation. Finally for the coating prepared from dispersed TiO₂ nanoparticles, the degradation of the colorant was in only 30 min after its exposure to UV light.

### EXAMPLE 4 - Comparative example

### Preparation of a photocatalytic coating on stainless steel from (3-glycidyloxypropyl)trimethoxysilane and titanium dioxide nanoparticles added in powder form using 1-methylimidazole as catalyst.

In order to demonstrate that the choice of the catalyst is essential in the method of the invention, a photocatalytic coating was prepared according to Example 1, although 1-methylimidazole was used as catalyst (used by Textor et al., *supra*) instead of Jeffamine D-230. Thus, it was observed that the coating produced had a lack of adherence, since the coating came off the surface on passing one's finger over its surface.

## Claims

1. A method to produce a transparent photocatalytic coating on a stainless steel substrate **characterized in that** it consists on the stages of:
(a) preparing the solution of a hydrolyzed epoxysilane compound said solution consisting on one epoxysilane, water and isopropanol;
(b) adding to the solution produced in (a) crystalline titanium dioxide nanoparticles in the form of powder, with a proportion of anatase phase over 75%, in a proportion of 1-15% by weight with respect to the total weight of the solution;
(c) adding to the solution produced in (b) a catalyst consisting of a polyetheramine;
(d) coating the metal substrate with the solution produced in (c); and
(e) subjecting the coated metal substrate to a thermal treatment.

2. Method according to claim 1, **characterized in that** the titanium dioxide nanoparticles are titanium dioxide nanoparticles modified by doping with at least one of the following elements: nitrogen, carbon and sulphur.

3. Method according to claim 1, **characterized in that** in stage (b) 10% by weight is added, with respect to the total weight of the solution, of titanium dioxide nanoparticles.

4. Method according to claim 1, **characterized in that** the epoxysilane compound of stage (a) is one selected from (3-glycidyloxypropyl)trimethoxysilane, glycidoxypropyltriethoxysilane; glycidoxypropylmethyldimethoxysilane; glycidoxypropylmethyldiethoxysilane; and epoxycyclohexylethyltrimethoxysilane.

5. Method according to claim 4, **characterized in that** the epoxysilane compound of stage (a) is (3-glycidyloxypropyl)trimethoxysilane.

6. Method according to claim 1, **characterized in that** the catalyst of stage (c) is a polyetheramine selected from poly(propylene glycol) bis(2-aminopropyl ether); poly(propylene glycol)-*b*-poly(ethylene glycol)-*b*-poly(propylene glycol) bis(2-aminopropyl ether); and *O,O*'-Bis(2-aminopropyl)polypropylene glycol-b-polyethylene glycol-b-polypropylene glycol.

7. Method according to claim 6, **characterized in that** the catalyst of stage (c) is poly(propylene glycol) bis(2-aminopropyl ether).

8. Method according to claim 1, **characterized in that** in stage (e) the coated substrate is subjected to a thermal treatment at a temperature of 100-120 °C for a time of 5-70 minutes.

9. Method according to claim 8, **characterized in that** in stage (e) the coated substrate is subjected to a thermal treatment at a temperature of 105 °C for a time of 60 minutes.

10. Stainless steel substrate coated with the transparent photocatalytic coating obtainable by the method of claims 1-9.

## Patentansprüche

1. Ein Verfahren zum Herstellen einer transparenten photokatalytischen Beschichtung auf einem Edelstahlsubstrat, **dadurch gekennzeichnet, dass** es aus den folgenden Schritten besteht:
(a) Herstellen der Lösung einer hydrolysierten Epoxysilanverbindung, wobei diese Lösung aus einem Epoxysilan, Wasser und Isopropanol besteht;
(b) Zugeben von kristallinen Titaniumdioxidnanopartikeln in Form eines Pulvers mit einem Anteil an einer Anatasphase über 75 % zu der Lösung, die in (a) hergestellt wurde, in einem Anteil von 1 bis 15 Gew.-% in Bezug auf das Gesamtgewicht der Lösung;
(c) Zugeben eines Katalysators, der aus einem Polyetheramin besteht, zu der Lösung, die in (b) hergestellt wurde;
(d) Beschichten des Metallsubstrats mit der Lösung, die in (c) hergestellt wurde, und
(e) Aussetzen des beschichteten Metallsubstrats gegenüber einer thermischen Behandlung.

2. Verfahren gemäß Anspruch 1, **dadurch gekennzeichnet, dass** die Titaniumdioxidnanopartikel Titaniumdioxidnanopartikel sind, die durch Dotieren mit wenigstens einem der folgenden Elemente: Stickstoff, Kohlenstoff und Schwefel, modifiziert wurden.

3. Verfahren gemäß Anspruch 1, **dadurch gekennzeichnet, dass** in Schritt (b) 10 Gew.-%, bezogen auf das Gesamtgewicht der Lösung, von Titaniumdioxidnanopartikeln zugegeben werden.

4. Verfahren gemäß Anspruch 1, **dadurch gekennzeichnet, dass** die Epoxysilanverbindung des Schritts (a) eine, ausgewählt aus (3-Glycidyloxypropyl)trimethoxysilan, Glycidoxypropyltriethoxysilan, Glycidoxypropylmethyldimethoxysilan, Glycidoxypropylmethyldiethoxysilan und Epoxycyclohexylethyltrimethoxysilan, ist.

5. Verfahren gemäß Anspruch 4, **dadurch gekennzeichnet, dass** die Epoxysilanverbindung des Schritts (a) (3-Glycidyloxypropyl)trimethoxysilan ist.

6. Verfahren gemäß Anspruch 1, **dadurch gekennzeichnet, dass** der Katalysator des Schritts (c) ein Polyetheramin, ausgewählt aus Poly(propylenglykol)bis(2-aminopropylether), Poly(propylenglykol)-*b*-poly(ethylenglykol)*b*-poly(propylenglykol)bis(2-aminopropylether) und *O*,*O*'-Bis(2-aminopropyl)polypropylenglykol-*b*-polyethylenglykol-*b-*polypropylenglykol, ist.

7. Verfahren gemäß Anspruch 6, **dadurch gekennzeichnet, dass** der Katalysator des Schritts (c) Poly(propylenglykol)bis(2-aminopropylether) ist.

8. Verfahren gemäß Anspruch 1, **dadurch gekennzeichnet, dass** in Schritt (e) das beschichtete Substrat gegenüber einer thermischen Behandlung bei einer Temperatur von 100 bis 120°C für eine Zeitdauer von 5 bis 70 min ausgesetzt wird.

9. Verfahren gemäß Anspruch 8, **dadurch gekennzeichnet, dass** in Schritt (e) das beschichtete Substrat gegenüber einer thermischen Behandlung bei einer Temperatur von 105°C für eine Zeitdauer von 60 min ausgesetzt wird.

10. Edelstahlsubstrat, beschichtet mit der transparenten photokatalytischen Beschichtung, die durch das Verfahren gemäß der Ansprüche 1 bis 9 erhältlich ist.

## Revendications

1. Procédé de production d'un revêtement photocatalytique transparent sur un substrat en acier inoxydable **caractérisé en ce qu'**il comprend les étapes suivantes :
(a) préparation de la solution d'un composé d'époxysilane hydrolysé, ladite solution étant constituée d'un époxysilane, d'eau et isopropanol ;
(b) ajout à la solution produite en (a) de nanoparticules cristallines de dioxyde de titane sous forme de poudre, ayant une proportion de phase anatase supérieure à 75 %, en une proportion de 1 à 15 % en poids du poids total de la solution ;
(c) ajout à la solution produite en (b) d'un catalyseur constitué d'une polyétheramine ;
(d) revêtement du substrat métallique avec la solution produite en (c) ; et
(e) soumission du substrat métallique revêtu à un traitement thermique.

2. Procédé selon la revendication 1, **caractérisé en ce que** les nanoparticules de dioxyde de titane sont des nanoparticules de dioxyde de titane modifiées par dopage avec au moins un des éléments suivants : azote, carbone et soufre.

3. Procédé selon la revendication 1, **caractérisé en ce que**, à l'étape (b), 10 % en poids de nanoparticules de dioxyde de titane sont ajoutés, par rapport au poids total de la solution.

4. Procédé selon la revendication 1, **caractérisé en ce que** le composé d'époxysilane de l'étape (a) est un composé choisi parmi le (3-glycidyloxypropyl)triméthoxysilane, le glycidoxypropyltriéthoxysilane ; le glycidoxypropylméthyldiméthoxysilane ; le glycidoxypropylméthyldiéthoxy-silane ; et l'époxycyclohexyléthyltriméthoxysilane.

5. Procédé selon la revendication 4, **caractérisé en ce que** le composé d'époxysilane de l'étape (a) est le (3-glycidyloxypropyl)-triméthoxysilane.

6. Procédé selon la revendication 1, **caractérisé en ce que** le catalyseur de l'étape (c) est une polyétheramine choisie parmi le bis(2-aminopropyléther) de poly(propylène glycol) ; le bis(2-aminopropyléther) de poly(propylène glycol)-*b*-poly(éthylène glycol)-*b*-poly(propylène glycol) ; et le *O,O'*-bis(2-aminopropyl)polypropylène glycol-*b*-polyéthylène glycol-*b-*polypropylène glycol.

7. Procédé selon la revendication 6, **caractérisé en ce que** le catalyseur de l'étape (c) est le bis(2-aminopropyléther) de poly(propylène glycol).

8. Procédé selon la revendication 1, **caractérisé en ce que**, à l'étape (e), le substrat revêtu est soumis à un traitement thermique à une température de 100 à 120 °C pendant une durée de 5 à 70 minutes.

9. Procédé selon la revendication 8, **caractérisé en ce que**, à l'étape (e), le substrat revêtu est soumis à un traitement thermique à une température de 105 °C pendant une durée de 60 minutes.

10. Substrat en acier inoxydable revêtu du revêtement photocatalytique transparent pouvant être obtenu par le procédé selon les revendications 1 à 9.
